# EUROPEAN PATENT APPLICATION

(11) **EP 2 323 314 A1**
(43) Date of publication of application: **18.05.2011**
(21) Application number: 09447059.8
(22) Date of filing: 17.11.2009
(51) Int. Cl.: H04L 12/28, H04L 12/56

(54) **Method of accessing services and corresponding apparatus**

(71) Applicant: Thomson Telecom Belgium, 2650 Edegem (BE)
(72) Inventor: Horemans, Erik, 9120 Melsele (BE); Van de Poel, Dirk, 2630 Aartselaar (BE); De Smedt, Alex, 2250 Olen (BE)
(74) Representative: Huchet, Anne

(57) **Abstract**

The present invention generally relates to digital communications, and more particularly, to a technique and a device for accessing services provided to devices connected in a home network to a communication link to an external network, so as to optimize the access to these services by the devices in the home network. To this effect, the invention comprises a method of providing access to services, a corresponding method for accessing services and a gateway device.

## Description

### 1. Field of invention.

The present invention generally relates to digital communications, and more particularly, to a technique and a device for accessing services provided to devices connected in a home network to a communication link to an external network, so as to optimize the access to these services by the devices in the home network.

### 2. Technical background.

With the emergence of multiple devices in a home network connected via a gateway to an external network, sharing of the available bandwidth on the communication link the external network becomes a problem. For example, a home network comprises a Personal Computer, a telephone set, and several IPTV (Internet TeleVision) Set Top Boxes or STBs, all of which are connected to a home gateway device. The Personal Computer is used to browse on the internet, to exchange e-mails and to play networked multiplayer games; the telephone set is used for incoming and outgoing telephone calls over IP; and the set top boxes are used to receive live High-Definition video streams. Sharing of all this traffic over the communication channel from the home gateway to the service provider providing the mentioned services becomes problematic if the simultaneous bandwidth need of all these devices exceeds the maximum available or permissible bandwidth on the communication link to the home.

International Patent Application WO 2008/023130 A2 describes a device and method for managing service requests from receiver devices connected to a communication device that interconnects the receiver devices with a communication network. According to this document, the communication device transmits a request without modification, modifies the request to request a stream of lesser quality, or refuses to transmit the request. The communication device gets information on the encoding type of the requested stream and of the bandwidth required for the requested stream from a service plan; the device also keeps track of the received services by means of a table of received services, that is constructed by received IGMP requests. The communication device calculates the available and required bandwidth based on information comprised in the table and in the service plan.

The access methods according to prior art are thus rather limited and concentrate directly on the service request and refusing/allowing a request or requesting a degraded service, decisions which are merely based on the bandwidth information/encoding type used. The admission policy rules that the prior art provides are too limited to distribute available resource, i.e. the bandwidth available on the shared communication link, in an optimized manner over the devices of the home network requesting the services.

Accordingly, there is a need for a technique that allows optimizing the access to services by the devices in the local area network that need a communication link to an external network in a balanced way.

### 3. Summary of the invention.

Throughout this document, the term bandwidth limitation is used. In the context of the invention, this means a bit rate limitation or a quality of service limitation, or both. An example of a bit rate limitation is 2Mbit/s. An example of a quality of service (QoS) limitation is SD video. If the bandwidth limitation comprises both a bit rate and a QoS limitation, the most constraining limit is considered as being the bandwidth limitation.

Throughout this document, the wording 'service' is used. In the context of the invention, this means types of services, such as a digital audio/video service, i.e. a television channel, an audio service such as a radio podcast, an internet data service such as web browsing, a voice-over-IP service.

Throughout this document, the wording 'servicing' is used. In the context of the invention, this means the handling of a service, i.e. transmission and reception of data- and communication protocol traffic related to the service.

Throughout this document, the wording 'reconfiguration' is used. In the context of the invention, this means changing the bandwidth of a service, for example change the bandwidth of an audio/video service from 5 Mbit/s to 2,5 Mbit/s or from HD to SD.

The present invention aims at alleviating the inconveniences of prior art.

More precisely, the invention allows optimization of the access to services by the devices in the local area network that share a communication link to an external network.

In order to reduce optimization of the access to services by the devices in the local area network that share a communication link to an external network, the invention proposes a method of implemented by an intermediate device interconnecting one or more devices in a home network with an external network via a communication link that is shared between the at least one device, the method comprising the successive steps of
reception of a request for admission of a service, the request comprising information representative of a requested service;
a step of first determination if required bandwidth for the requested service exceeds available bandwidth on the communication link, the available bandwidth being equal to a maximum bandwidth of the communication link minus a sum of bandwidth of at least one already admitted request;
if the required bandwidth does not exceed the available bandwidth, sending of a notification of grant of the request for admission;
else second determination if among the at least one already granted request there exists at least one granted request that can be serviced with a lower bandwidth than with which it was granted, so that the required bandwidth does not exceed the available bandwidth, servicing of the at least one granted request with the lower bandwidth and sending of a notification of grant of the request for admission;
else third determination if among the at least one already granted request, there exists at least one granted request of which servicing can be stopped so that the required bandwidth does not exceed the available bandwidth, stopping of servicing of the at least one granted request, and sending of a notification of grant of the request for admission.

According to a variant of the method of providing access to services, an attempt to connect to a service for which no notification of grant was sent, is refused. So, any connection request that is received for which no grant has been received, is refused.

According to a variant of the method of providing access to services, the notification of allowance comprises information representative of a grant expiration delay, and if the request for admission is not renewed before expiration of the grant expiration delay, sending of a notification of grant revocation and stopping of servicing of the requested service.

According to a variant of the method of providing access to services, the method comprises, before the step of first determination, a step of verification of access rights related to the request for admission, and if the access rights are insufficient, sending of a notification of admission rejection.

According to a variant of the method of providing access to services, the access rights are part of a set comprising access rights related to:
- a user that is issuer of the request for admission; and/or
- a time of reception of the request for admission; and/or
- a duration of usage of a requested service; and/or
- a device from which the request for admission originates; and/or
- a service type the requested service; and/or
- a service category of the requested service.

According to a variant of the method of providing access to services, before the second and the third determination a bandwidth limitation for a type of service is taken in to account, so that, if the required bandwidth for the requested service is superior to the bandwidth limitation for a type of service of the requested service, the admission request is refused and a rejection notification is sent, whereas if the required bandwidth for the requested service is equal or inferior to the bandwidth limitation for a type of service of the requested service, the admission request is considered in the second and the third determination.

According to a variant of the method of providing access to services, before the second and the third determination a bandwidth limitation for a network interface on which the admission request is received is taken into account, so that, if the required bandwidth for the requested service is superior to the bandwidth limitation for a network interface on which the admission request is received, the admission request is refused and a rejection notification is sent, whereas if the required bandwidth for the requested service is equal or inferior to the bandwidth limitation for a network interface on which the admission request is received, the admission request is considered in the second and the third determination.

According to a variant of the method of providing access to services, in the second and the third determination a priority associated to the request for admission is taken into account, so that among the at least one already granted request, only granted requests with a lower or equal associated priority than the request for admission are considered in the second and the third determinations.

According to a variant of the method of providing access to services, the associated priority is part of a set comprising:
a priority level associated to the request for admission; and/or
a priority level associated to the requested service; and/or
a priority level associated to a device from which the request and/or admission originates; and/or
a priority level associated to a user that is issuer of the request for admission.

The invention also proposes a method of accessing services, implemented by at least one device connected in a home network to an intermediate device giving access to the services via a communication link, the communication link being shared between the at least one device, the method comprising the following steps:
sending of a request for admission of a service, the request comprising information representative of a requested service;
upon reception of a notification of grant of the request for admission, sending of a connection request for connection to the requested service, and reception of at least one packet belonging to the requested service;
upon reception of a grant modification notification, the grant modification notification comprising the information representative of the requested service and information representative of an alternative service with a bandwidth different from a bandwidth of the requested service, stop of reception of the at least one packet belonging to the requested service and start of reception of at least one packet belonging to the alternative service.

The invention also proposes a gateway device for providing access, for devices in a local network, to services accessed via a communication link to an external network, the communication link being shared between the devices, the gateway device being characterized in that it comprises
means for determination if a required bandwidth for the requested service exceeds available bandwidth on the communication link, the available bandwidth being equal to a maximum bandwidth available on the communication link minus a sum of bandwidth of at least one already admitted request stored in the granted admission repository;
means, for determining if among the at least one already granted request there exists at least one granted request that can be serviced with a lower bandwidth than with which it was granted, so that the required bandwidth does not exceed the available bandwidth on the communication link;
means for servicing of the at least one granted request with the lower bandwidth;
means for determining if among the at least one already granted request stored in the granted admission request repository, there exists at least one granted request of which servicing can be stopped so that the required bandwidth does not exceed the available bandwidth on the communication link; and
means for stopping of servicing of the at least one granted request.

### 4. List of figures.

More advantages of the invention will appear through the description of particular, non-restricting embodiments of the invention. The embodiments will be described with reference to the following figures:
Figure 1 shows a particular embodiment of the invention, illustrated by means of network-interconnected devices;
Figure 2 shows a home gateway, such as home gateway device of figure 1, according to a particular embodiment of the invention;
Figure 3 shows a sequence diagram illustrating the sequence of events upon reception of an admission request, sent for example by a device in the home network of figure 1, according to a particular embodiment of the invention;
Figure 4 shows a sequence diagram illustrating a different scenario of events upon reception of an admission request, according to a particular embodiment of the invention;
Figure 5 shows a flow chart that illustrates priority management of admission requests according to a particular embodiment of the invention; and
Figure 6 shows an algorithm of providing access to services, implemented for example by the home gateway device of figure 1 according to a particular embodiment of the invention.

### 5. Detailed description of the invention.

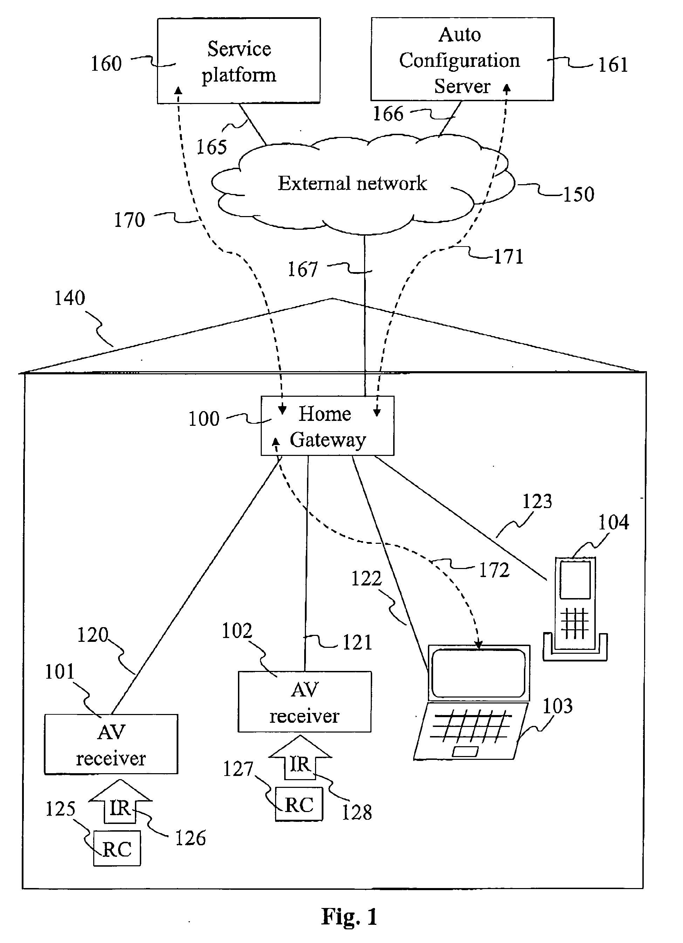

Figure 1 shows a particular embodiment of the invention, illustrated by means of network-interconnected devices.

A user premise 140 comprises a home gateway 100, two AV receivers 101 and 102 equipped with remote controls 125 and respectively 127. The Remote controls 125 and 127 allow a user to transmit channel change commands to respectively AV receivers 101 and 102, using infra-red light emission 126 respectively 128. AV receivers 101 and 102 are connected to a home gateway 100 by means of connections 120 respectively 121, which gives the AV receivers 101 and 102 access to the external network 150, a digital packet transport network, via a connection 167 from home gateway 100 to external network 150. User premise 140 further comprises a personal computer 103, connected to home gateway via connection 122, and a wireless telephone 104, that is connected to home gateway 100 via connection 123. To the external network 150 are connected a service platform 160 and an auto configuration server or ACS 161, via respectively connections 165 and 166. Auto-configuration server 161 provides gateway 100 with parameters such as the total bandwidth available on communication link 167, priorities between different types of data, e.g. telephony data has highest priority, HTTP data has lowest priority, or even bandwidth available per service type. According to a particular embodiment of the invention, the auto-configuration data is copied as configuration data into gateway 100 by means of the TR-069 protocol defined by the Broadband Forum, illustrated by dotted arrow 171. According to a particular variant of the invention, the provider uploads configuration data, for example on the services that the devices of the home network can access in home gateway 100, for example service bandwidth, type of service, alternative services e,g. a SD (standard definition) alternative for an HD (high definition) video service, illustrated by dotted arrow 170. According to a particular variant of the invention, one or more of the devices in the home network supply the gateway with configuration data, illustrated by dotted arrow 172. According to a particular embodiment of the invention some or all of these variant embodiments illustrated by dotted arrows 170, 171 and 172 are combined, to provide a particular complete set of configuration data to gateway 100.

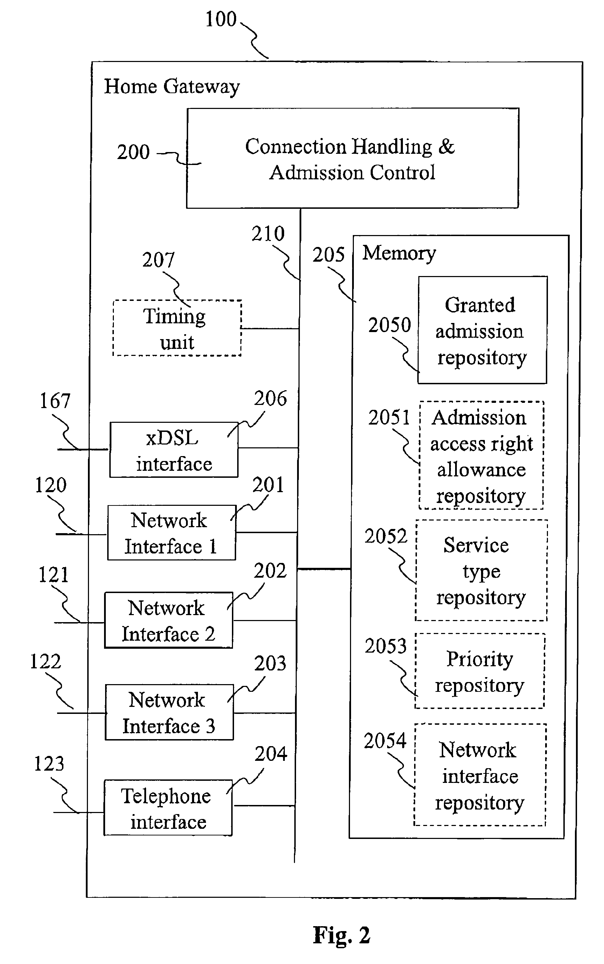

**Figure 2** shows a home gateway, such as home gateway device 100 of figure 1, according to a particular embodiment of the invention.

The home gateway 100 comprises the following elements:
- Connection handling and admission control unit 200;
- an DSL (Digital Subscriber Line) interface 206.
- a first network interface 201 of type Ethernet;
- a second network interface 202 of type Ethernet;
- a third network interface 203 of type Ethernet;
- a telephone interface 204 of type POTS (Plain Old Telephone Service);
- a memory 205, comprising a granted admission repository 2050 and optionally an admission access right allowance repository 2051, a service/network parameter repository 2052, and a priority repository 2053 ; and
- an optional timing unit 207.

Connection handling and admission control unit 200, network interfaces 201, 202, 203, telephone interface 204, memory 205, and DSL interface 206 and timing unit 207 are interconnected through a digital data communication bus 210. Device 100 has the following input/outputs: input/output 120 is connected to network interface 201, input/output 121 is connected to network interface 202, input/output 122 is connected to network interface 203, input/output 123 is connected to telephone interface 204, and input/output 167 is connected to DSL interface 206.

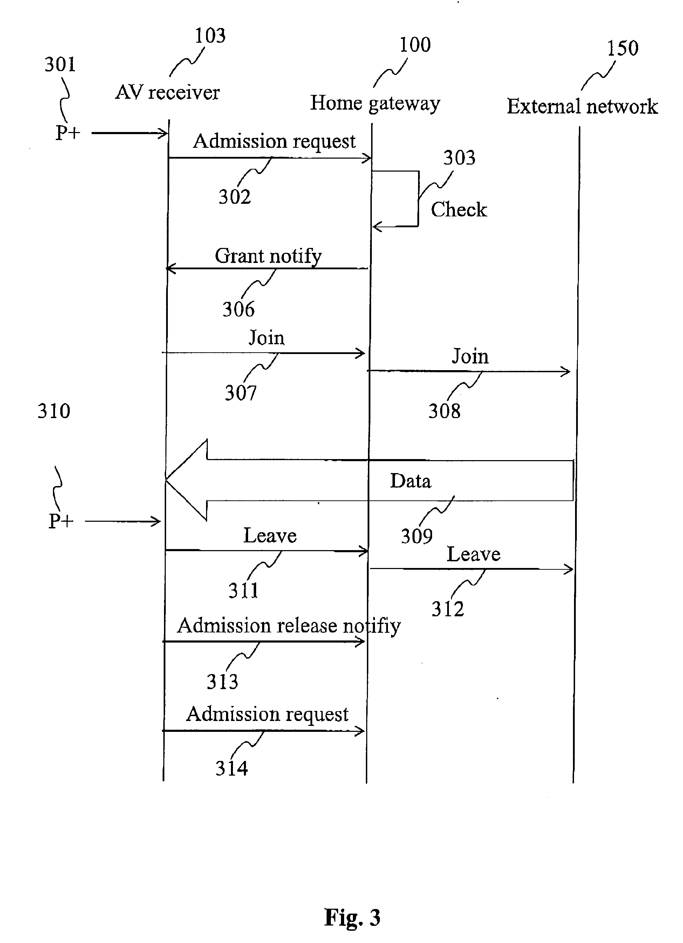

**Figure 3** shows a sequence diagram illustrating the sequence of events upon reception of an admission request, sent for example by audio/video receiver 101 of figure 1, according to a particular embodiment of the invention.

The figure illustrates some of the aspects of the invention, and shows in particular the protocol of exchanges in a simple scenario between a device 101 of the home network, a home gateway 100 and an external network 150 according to a particular embodiment of the invention.

The sequence diagram is illustrated by means of three vertical timelines representing AV receiver 101, home gateway 100 and external network 160.

The sequence diagram starts upon reception by AV receiver 101 of a channel change command, illustrated by arrow 301. Upon reception of this command, AV receiver 101 sends an admission request to home gateway, requesting admission of a service, the latter being provided in the admission request. Upon reception of the admission request, the home gateway 100 verifies, by means of connection handling and admission control unit 200 which uses information on granted requests stored in memory 205 in granted admission repository 2050, to determine if the request can be granted, which is illustrated by arrow 303. Granted admission repository 2050 typically comprises, for each granted admission request, data such as information identifying the admission request issuer (user id, device address, device type, ...), information on the requested service, time of reception of the request, and so on. To verify if the admission request can be granted, connection handling and admission control unit 200 verifies if the request does not result in exceeding the bandwidth on the communication link 167 from the home gateway to the external network 150. This depends on the bandwidth available on the communication link 167 stored in memory 205 and of the existence of any already granted admission requests, also stored in memory 205, in admission status repository 2050. The admission request can be granted if there is sufficient bandwidth available on the communication link 167, which is verified by connection handling and admission control unit 200 by checking with the information stored in the admission status repository 2050. Depending on the bandwidth available on the communication link 167 and on information in admission status repository 2050 on the existence of any already granted admission request and on the bandwidth they occupy, connection handling and admission control unit 200 decides whether the request can be granted immediately or whether granting implies stopping of servicing or modifying the bit rate and/or the service quality of one or more services belonging to already granted admission requests, i.e. reconfiguration of already granted admission requests. Connection handling and admission control unit 200 thus verifies if the total bandwidth available on communication link 167, stored in configuration data inside gateway 100, minus the sum of the bandwidths occupied as indicated by the granted admissions stored in the admission status repository is equal or superior to the bandwidth needed by the service to which the received admission request relates. It is worthwhile mentioning, that the admission status repository may not reflect an actual state on the communication link 167, because some of the granted admission requests may not be used yet, or are being paused, According to the illustrated scenario, the bandwidth available on communication link 167 is sufficient, i.e. there is enough bandwidth available so that adding the service to which the admission request is related does not result in reception errors for any already granted requests, and that admission request 302 from AV receiver 101 thus can be granted immediately, i.e. without reconfiguration of already granted admission requests; and thus connection handling and admission control unit 200 sends a grant notification message to AV receiver 101 by means of network interface 201 and adds information related to the granted admission request to the granted admission repository 2050. Upon reception of this message, AV receiver 101 connects to the desired service, which is illustrated by arrow 307. Illustrated is a 'join', which refers to IGMP (IP (Internet Protocol) multicasting protocol), but any type of connection request is possible, such as RTSP (Real-Time Protocol), TCP (Transmission Control Protocol), UDP (User Datagram Protocol), RTP (Realtime Transport Protocol or HTTP (HyperText Transport Protocol), SIP (Session Initiation Protocol); in fact, any type of admission request can be considered according to specific variants of the invention. Connection handling and admission control unit 200 verifies if among the data comprised in granted admission repository 2050 there exists an already granted admission request that is related to connection request 307. Since connection handling and admission control unit 200 has granted the admission request to which the 'join' connection request 307 relates and thus an entry in granted admission repository 2050 exists related to the service, it determines that the connection request 307 is allowed and connection handling and admission control unit 200 thus transmits the connection request 307 to the external network 150, which is illustrated by arrow 308 'join'. If no such entry would exist, connection handling and admission control unit 200 refuses the connection request 307 and will not transmit the connection request 307 to the external network 150. The connection handling and admission control unit 200 is able to relate a connection request to an admission request, since the admission request comprises the requested service. When data from the requested service is received by home gateway 100 from the external network 150, it is thus throughput to AV receiver 101, which is illustrated by arrow 309. When the user again releases the channel (for example by issuing a channel change), illustrated by arrow 310, AV receiver 101 sends a disconnection request to home gateway 100, illustrated by arrow 'leave' 311, and home gateway 100 transmits the disconnection request to the external network, illustrated by arrow 312. Then AV receiver 101 sends an admission release notification to home gateway 100, illustrated by arrow 313. This admission release notification results in the removal, by connection handling and admission control unit 200, of the related granted admission request entry in granted admission repository 2050. Next, upon the channel change, AV receiver 101 sends an admission request to home gateway 100 for the new requested service, illustrated by arrow 314. The process then repeats as for example illustrated, starting from arrow 303 (admission check).

According to a variant embodiment of the invention, gateway 100 further comprises a timing unit 207, allowing it to record the time of admission grant and store it in memory 205 and to verify, for the granted admission requests, if a grant expiration delay has expired, upon which a notification of grant revocation is sent to the issuer of the involved admission request, the related entry in the granted admission repository 2050 is removed, and the gateway 100 stops servicing of the service related to the involved admission request, I.e. by transmission of a request to stop the related service to the external network 150 or by simply refusing to transmit packets of the related service. To avoid expiration of the grant expiration delay, the admission request is to be renewed regularly, or a specific message is to be sent to gateway 100 that indicates the desire to maintain a granted admission request. This variant has the advantage to avoid the granted admission repository 2050 to be polluted by no longer used granted admission requests, for which, for one reason or another, no admission release request has been received. As an example, the service related to the admission request was never used, i.e. a service request was never received for the service related to the granted admission request, or a device using a requested service is suddenly powered off.

According to a variant embodiment of the invention, gateway 100 comprises, in addition to granted admission repository 2050, an admission access right allowance repository 2051 in memory 205, which enables connection handling and admission control unit 200 to verify, during the admission check operation illustrated by arrow 303, whether there are sufficient access rights to consider the admission request. An admission request that is not considered is rejected without further consideration and a notification of admission rejection is sent. An admission request that is considered is considered in the determination of available bandwidth on the communication link 167 connecting the gateway 100 to the external network 150. This variant has the advantage to allow for example parental control; the rules defining access rights are configured and stored in the admission access right allowance repository 2051, for example by means of an access right management configuration web application proposed by gateway 100 and which can be accessed using Personal Computer 103. This would allow for example one person of a family to define access right rules for the whole family, and once these have been defined, the gateway takes its decision rejections related to access rights according to the defined rules. According to a variant embodiment, the rules defining access rights are stored in admission access right allowance repository 2051 by a device external to the home network, for example by a service provider's configuration server. This allows a service provider defining general rules that are then applied automatically to the user of the services made available through the service platform of the service provider. According to a variant embodiment, the rules defining access rights are both defined by a user of the home network and by a device external to the home network. This has the advantage, to allow for example a service provider to define default rules, which can then be modified by a user of the home network to suit his particular needs. In case of trouble shooting, any modifications to the limitations in the repository 2051 can then be reset by the service provider.

According to a variant embodiment, the access right verification comprises a verification of the user that is the issuer of the admission request against the rules defined in the admission access right allowance repository 2051, so that a user that is not allowed to issue a request is rejected. This has the advantage to refuse access to certain users, temporary or permanently.

According to a variant embodiment, the access right verification comprises a verification of a time of reception of a request for admission. This has the advantage to be able to refuse access to a service based on a time limit; for example, after 19 PM, all access to services is refused.

According to a variant embodiment, the access right verification comprises a verification of an absolute time limit of a requested service. This provides an advantage, to allow stopping of servicing of a service after a specific time, for example, after 19 PM, an admission request that was granted before this time is revoked, and the servicing of the service related to this request is stopped.

According to a variant embodiment, the access right verification comprises a verification of a duration of a requested service. This has the advantage to be able to put a time span limit on the use of a requested service, for example an internet service can only be used for two hours.

According to a variant embodiment, the access right verification comprises a verification of the device from which the admission request originates. This has the advantage to allow refusing access to services for a particular device, for example the AV receiver 2, temporarily or permanently.

According to a variant embodiment, the access right verification comprises a verification of a service type of a requested service. This has the advantage to allow refusing of access to certain service types, such as video services.

According to a variant embodiment, the access right verification comprises a verification of a service category. This has the advantage to allow rejection of admission requests for services related to, for example, service category "ages 12+", or "violence",

According to a variant embodiment, the access right verification comprises a combination of some or all of the above access right verifications. This can be particularly advantageous, for example a verification of a user issuer of a request combined with a verification of a time of reception of the request allows refusing access to a particular user before or after a particular time.

According to a variant embodiment of the invention, gateway 100 comprises a service type repository 2052 in memory 205 in addition to granted admission repository 2050, enabling connection handling and admission control unit 200 to verify, during the check operation illustrated by arrow 303, whether an admission request for a requested service of a specific type is subject to a bandwidth limitation in the form of a quality of service limitation or a bit rate limitation, in case an admission request for a service exceeds the bandwidth limitation for the requested service that is stored in repository 2052, the admission request is not considered and is rejected without further consideration and a notification of admission rejection is sent. Exceeding means here, that if the bandwidth needed for the service of the admission request is superior to the bandwidth limit defined for the type of service of the admission request as stored in repository 2054. This means for example that the bit rate of the service and/or that the quality of service needed for the service of the admission request, is superior to the bandwidth limit that is defined for the type of service of the admission request, as stored in repository 2054. An example of a bandwidth limitation in the form of a quality of service (QoS) limitation, is for example SD video (standard definition), so a request for HD video exceeds the QoS limitation 'SD video'. An example of a bandwidth limitation in the form of a bit rate, is for example 2Mbit/s; an admission request for a service needing 5Mbit/s exceeds the 2Mbit/s bandwidth limitation. This leaves the device or the user with the possibility to issue another admission request, which will be considered for a check of available bandwidth on communication link 167 if the admission request respects the bandwidth limitations stored in repository 2052.

According to a further optimized variant embodiment, in case an admission request for a service exceeds the bandwidth limitation for the requested service that is stored in repository 2052, the admission request is not rejected without further consideration but connection handling and admission control unit 200 verifies, during the check operation illustrated by arrow 303, whether, among granted admission requests for the same type, a reconfiguration is possible. Only if no reconfiguration is possible, the admission request is rejected and a rejection notification is sent. Otherwise, the admission request is granted, a grant notification is sent and the granted admission request is added to the granted admission repository 2050 and to the service type repository 2052.

According to a variant embodiment, the limitations stored in the service type repository 2052 are defined by a user of the home network. This has the advantage to allow, for example, a user defining a bandwidth limitation to internet type traffic, so as to ensure enough bandwidth for video type traffic.

According to a variant embodiment of the invention, the limitations stored in the service type repository 2052 are defined by a device external to the home network, e.g. by a configuration server of a service provider. This has the advantage to allow a service provider define general limitations on bandwidth used by some service types, in order to allow, for example, to always keep enough bandwidth available for one telephony type service, no matter what services are requested by the devices in the home network.

According to a variant embodiment of the invention, the limitations stored in the service type repository 2052 are defined by a user of the home network and by a device external to the home network, which has for example the advantage for a service provider to be able to define general rules, which can then be adapted by a user of the network according to his particular needs. In case of trouble shooting, any modifications to the limitations in the repository 2052 can then be reset by the service provider.

According to a variant embodiment of the invention, gateway 100 comprises a network interface repository 2054 in memory 205 in addition to granted admission repository 2050, enabling connection handling and admission control unit 200 to verify, during the check operation illustrated by arrow 303, whether admission requests received on a particular network interface is subject to bandwidth (i.e. bit rate and/or quality of service) limitation. In case an admission request would result in exceeding a bandwidth limitation set for the particular network interface on which the request is received, the admission request is not considered and is rejected, and a rejection notification is sent. What exceeding a bandwidth limitation means in the context of the invention is already explained for the service type repository.

According to a further optimized variant embodiment, in case an admission request for a service exceeds the bandwidth limitation for the network interface on which the request is received, the bandwidth limitation for each particular network interface being stored in repository 2052, the admission request is not rejected without further consideration but connection handling and admission control unit 200 verifies, during the check operation illustrated by arrow 303, whether, among granted admission requests received on the same network interface, a reconfiguration is possible. Only if no reconfiguration is possible, the admission request is rejected and a rejection notification is sent. Otherwise, the admission request is granted, a grant notification is sent and the granted admission request is added to the granted admission repository 2050, and to the network interface repository 2054.

According to a variant embodiment, the limitations stored in the network interface repository 2054 are defined by a user of the home network. This has the advantage to allow, for example, a user defining a bandwidth limitation to a specific network interface connecting a secondary AV receiver in the sleeping room, so as to keep enough bandwidth to receive HD video streams on a primary AV receiver in the living room.

According to a variant embodiment of the invention, the limitations stored in the network interface repository 2054 are defined by a device external to the home network, e.g. by a configuration server 161 of a service provider. This has the advantage to allow a service provider define general limitations on bandwidth per network interface on gateway 100, in order to ensure, for example, to always keep enough bandwidth available for at least one telephone service, by a telephone connected to the specific telephone interface 204.

According to a variant embodiment of the invention, the limitations stored in the network interface repository 2054 are defined by a user of the home network and by a device external to the home network, which has for example the advantage for a service provider to be able to define general rules, which can then be adapted by a user of the home network according to his particular needs. In case of trouble shooting, any modifications to the limitations in the repository 2054 can then be reset by the service provider.

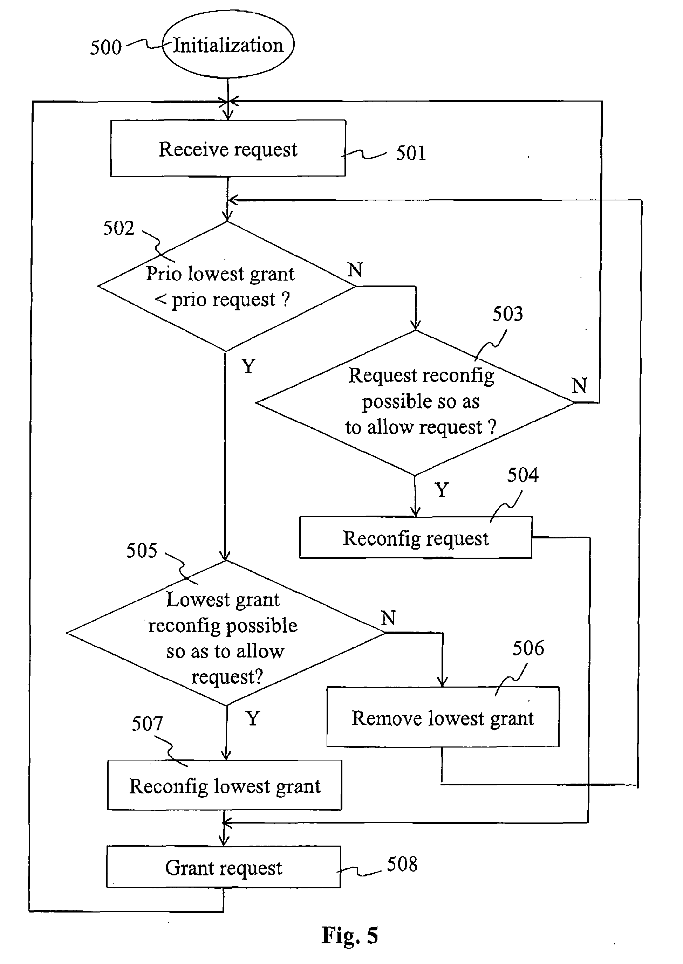

According to a variant embodiment of the invention, the gateway 100 comprises a priority repository 2053 in addition to granted admission repository 2050, allowing the gateway 100 to handle admission requests according to priority. A particular embodiment of the invention that comprises handling of admission requests according to priority is illustrated in figure 5.

According to a variant embodiment, admission rejections comprise the reason for which the admission is rejected. This has the advantage to allow the requesting device for example to show a message to the user indicating the reason of rejection, so that the user can for example issue another request for an alternative service, e.g. a same service with a lower quality, or a same request from another device or from another user, giving higher priority, request another user to release a granted admission request, or stop using one or more other services that prevent the admission request to be granted. It also allows the requesting device to search and request an alternative service, so that without intervention of the user, an alternative service can for example be requested automatically by the device.

According to a particular advantageous embodiment, the gateway 100 comprises all or some of the repositories 2051, 2052, 2053 and 2054 in addition to admission status repository 2050, so that the use of the available resource, that is the available bandwidth on the communication link 167, is shared in an optimized manner between all of the devices in the home network. For example, in an embodiment combining granted admission repository 2050, admission access right allowance repository 2051, service type repository 2052, priority repository 2053 and network interface repository 2054, it is possible to set a bandwidth limitation for video type services for a particular device connected to a particular network interface, to limit bandwidth allowed to a particular user, and so on.

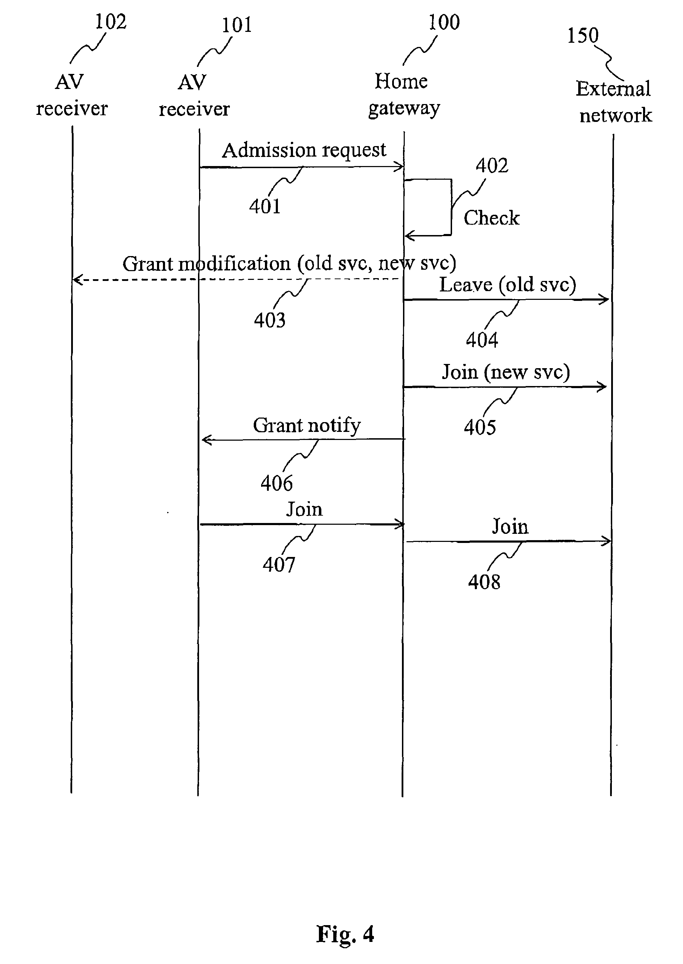

**Figure 4** shows a more complex scenario in which an admission request cannot be granted immediately.

Figure 4 shows a sequence diagram illustrating admission request handling according to a particular embodiment of the invention, implemented for example by home gateway 100 of figure 1.

The figure shows AV receiver 102, AV receiver 101, home gateway 100 and external network 150. Upon reception of an admission request 401 from AV receiver 101, home gateway 100 verifies in an admission check step 402 if the admission can be granted. According to the scenario of figure 4, the connection handling and admission control unit 200, after verification with the granted admission requests in granted admission repository 2050, concludes that the admission request cannot be granted immediately, but may be granted after a reconfiguration of already granted admission requests. In particular, according to the scenario of figure 4, before granting the new admission request, the already granted admission request for AV receiver 102 can be reconfigured, e.g. if the granted admission request for AV receiver 102 is related to a request for a HD video service and an alternative SD video service exists, the connection handling and admission control unit 200 sends a disconnect message 404 to the external network 150 for the HD service, followed by a connect message 405 to the SD service. The modification of the connection is done in a transparent way for the concerned receiver in the home network: if the connection to the HD service concerns a multicast address, the gateway 100 will transmit any received video multicast packets received on the SD service multicast address to the distribution address that was used on the home network for the HD service multicast, If the connection concerns a unicast connection, set up by the RTSP protocol for example, the gateway will likewise do all that is necessary to tear down the connection to the HD service and to set up the connection to the SD service, and any packets that are received from the SD service are transmitted to the concerned receiver in the home network to the address that was used by the concerned receiver for the unicast connection to the SD service. In this way, the reconfiguration is transparent for AV receiver 101 and requires no intervention of the receiving device, nor from any user, and is thus fast and nearly seamless. Note that the reconfiguration is be completely seamless if only a granted admission request is to be changed, which is the case when no connection request was serviced yet for the granted admission request. According to a variant embodiment, the gateway 100 sends a grant modification notification 403 to the device 102 in the home network for which a service is to be reconfigured, specifying in the message at least the alternative service with a different bandwidth than the 'old' service and that replaces the 'old' service, so that the concerned device 102 can take actions, for example show a message to the user, reconfigure its screen resolution, set new packet identification filters, initialize a video decoder, etc. Gateway 100 will from that moment stop servicing the 'old' service and start servicing the alternative service. With the stop servicing of the 'old' service, device 102 will stop receiving packets from the 'old' service and with the start servicing of the alternative service device 102 will receive packets from the alternative service.

Now when the connection reconfiguration is done, the home gateway sends a grant notification message 406 to AV receiver 101 and updates its repository 2050. Receiver 101 having received the grant notification message 403, now issues the connection request 407 for the service for which it received the grant message, and gateway 100, after verification that an entry exists for the requested service in granted admission repository 2050, forwards the connection request 407 to external network 150 (illustrated by arrow 408), and forwards the data traffic related to the connection of device 101 to the concerned device 101 in the home network (for incoming traffic) or to the external network 150 (for outgoing traffic),

**Figure 5** shows a flow chart that illustrates priority management of admission requests according to a particular embodiment of the invention. The algorithm is for example executed by gateway 100.

The algorithm starts with a step 500 of initialization of variables needed for its execution. Then, in a step 501, an admission request is received. Then, in a test step 502, the priority related to the request is verified with the priorities of already granted requests with the help of repositories 2050 and 2053, and notably the priority of the request is compared with the priority of the granted request having the lowest priority. If the priority of the granted request with the lowest priority is of a lower priority than the received admission request, test step 505 is executed; if not, test step 503 is executed, In test step 503, it is verified if the received admission request can be reconfigured, i.e. if a lower bit rate service can be supplied or a lower QoS so that enough bandwidth is freed to allow the request; if this is possible, the request is reconfigured in step 504, i.e. a lower quality service, a lower bit rate etc is set up for the concerned service, and the request is stored in repository 2050 as a granted request and its priority is stored in repository 2053 and a grant message is sent in step 508 to the issuer of the admission request. If the received admission request cannot be reconfigured so as to free enough bandwidth to allow the request, the request is rejected, a rejection notification is sent to the request issuer, and the algorithm reiterates with step 501. In test step 505, it is verified if the granted request with the lowest priority can be reconfigured or not, i.e. if a lower quality service (bit rate, QoS: SD instead of HD, ...) is possible for the service related to the concerned granted request, so as to free enough bandwidth to allow the request. If that is the case, then in a step 507 the concerned granted request is reconfigured, i.e. a lower quality service, a lower bit rate etc is set up for the concerned service, and a grant message is sent to the issuer of the admission request, and the request is stored in repository 2050 as a granted request and its priority is stored in repository 2053. If however the answer to test 505 is no, i.e. it is not possible to reconfigure the granted request with the lowest priority, then, in a step 506, the lowest priority request is removed from the granted request repository 2050, and removed from the priority repository 2053; if the service related to the removed request is ongoing, it is stopped; a grant revocation notification is sent to the issuer of the granted request that is now removed; and the algorithm continues with test step 502. According to a variant of the above described embodiment, the above embodiment is further optimized, for example if multiple lower priority granted admission request exists in repositories 2050 and 2053 that have lower priority than the received admission request, the algorithm does not remove from the bottom (i.e. the granted request with the lowest priority) but first check if removal or reconfiguration of granted requests is useful, for example if a received admission request has priority 3 and needs a bandwidth of 2 Mbit/s and there exist granted requests with lower priority 4 and bandwidth 5 Mbit/s and priority 5 and bandwidth 1 Mbit/s, there is no use in removing or reconfiguring the granted admission request with priority 5 since this will still not allow freeing enough bandwidth to grant the admission request, it is better to reconfigure granted admission request with priority 4 to gain 2 Mbit/s and thus free enough bandwidth while conserving the granted admission request with priority 5.

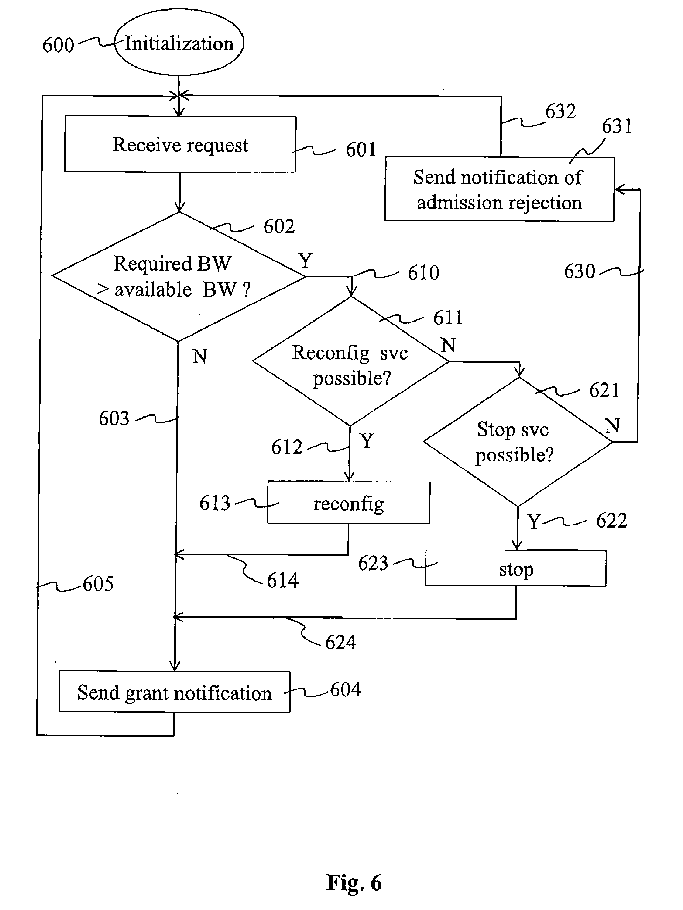

**Figure 6** shows an algorithm of providing access to services, implemented for example by gateway 100 of figure 1 according to a particular embodiment of the invention.

The algorithm starts with a step 600 of allocation and initialization of variables needed for its execution. Then, in a step 601 an admission request is received, such as admission request 401 of figure 4. Upon reception of the admission request, a test step 602 is executed.

If the bandwidth required by the admission request is superior to the available bandwidth, the available bandwidth being the bandwidth of the communication link 167 connecting the gateway 100 to the external network 150 minus the total bandwidths of all already granted admission requests that are stored in granted admission repository 2050. If the bandwidth required by the admission request is inferior or equal to the available bandwidth, gateway 100, in a step 604, sends a grant notification and adds the received admission request to the repository 2050 and the algorithm iterates with step 601.

If the required bandwidth is superior to the available bandwidth, a test step 611 is executed, in which it is determined if a reconfiguration of already granted admission requests, stored in repository 2050, is possible; i.e. if, among the already granted admission requests stored in repository 2050 there exist at least one admission request that can be serviced with a bandwidth lower than that with which it was granted, so as to free enough bandwidth on the communication link 167 so that the received admission request can be granted. If there at least one of such already granted request, the reconfiguration is done in step 613, i.e. for example according to one of the embodiments described for figure 4. Then, a grant notification is sent to the device from which the admission request was received, the admission request is added to granted admission repository 2050 and the algorithm reiterates with step 601.

If a reconfiguration is not possible, step 621 is executed, in which it is determined if one or more already granted admission requests stored in repository 2050 can be stopped, so as to free enough bandwidth on communication link 167 so as to allow the received admission request.

If this is the case, step 622 is executed in which the concerned service(s) is/are stopped and grant revocation is/are sent to the concerned device(s) and the concerned granted admission requests are removed from the granted admission repository 2050. Then, in step 604, a grant notification is sent to the sender of the received admission request, the admission request is added to the granted admission repository 2050 and the algorithm reiterates with step 601.

If there is no granted admission request in repository 2050 or if among the granted admission requests in repository 2050 there is/are no already granted admission(s) of which the related service(s) can be stopped so as to free enough bandwidth on communication link 167 so as to allow the received admission request, step 631 is executed, in which a notification of admission rejection is sent to the device from which the admission request was received, and the algorithm reiterates with step 601.

The network described in figure 1 is a mere example network in which the invention can be used. Other network configurations are possible while remaining compatible with the invention, comprising for example more than one user premise, with each one or more AV receivers, with- or without home gateway; in the case of a single AV receiver, the invention can be implemented in the receiver device. The architecture of the external network, in figure 1, a network 150, a service platform 160, and an auto-configuration server 161 may also be composed differently, according to the number of subscribers, the type of receivers used, the communication protocols used and the equipment needed to provide a service offering. Likewise, the home network is illustrated by means of IP-based connections and Ethernet interfaces, but the invention is not limited to the use of IP and Ethernet interfaces for the home network connections. Likewise, the external network interface of the gateway is represented as a DSL interface, but other types of interfaces are compatible with the invention, such as cable, fiber, or coax based interfaces.AV receivers 101 and 102 are represented in figure 1 as a stand-alone device; however implementation of the invention is not limited to a stand-alone device, the invention may very well be implemented on any device in the home network for example on personal computer 103 on an AV receiver integrated in a TV set, or a wired- or wireless multimedia receiver, or a handheld wireless transmitter/receiver device such as a mobile terminal.

The embodiments described are illustrated with 'Leave' and 'Join' actions to respectively send a request to stop receiving an AV stream and respectively to send a request to start receiving an AV stream. The wording 'Leave' and 'Join' is related to the Internet Group Management Protocol (IGMP), which is related to reception of multicast streams. The reader of the present document will understand that the invention also applies to other protocols, such as the Real-Time Streaming Protocol (RTSP), used for unicast transmissions.

The invention is not limited to the field of audio/video streams, the invention is applicable to any type of data traffic between the devices of the local network and devices on the external network, incoming and outgoing, on the shared communication link that connects at least one device of the local network to at least one device on the external network,

Other types of intermediate devices than gateway 100 illustrated by figure 2 are possible while being compatible with the invention, such as device with multiple dedicated processing units, multiple digital data communication buses. The invention may be completely built from software components running on a general-purpose device such as a Personal Computer, and the invention can then be implemented using a mix of hard- and software components. According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

## Claims

1. Method of providing access to services, implemented by an intermediate device (100) interconnecting at least one device (101, 102, 103, 104) in a home network with an external network via a communication link (167) shared between said at least one device (101, 102, 103, 104), **characterized in that** the method comprises the following successive steps:
- reception of a request for admission of a service (302, 401), said request comprising information representative of a requested service;
- first determination if required bandwidth for said requested service exceeds available bandwidth on said communication link (167), said available bandwidth being equal to a maximum bandwidth of said communication link (167) minus a sum of bandwidth of at least one already admitted request;
- if said required bandwidth does not exceed said available bandwidth, sending of a notification of grant (306, 406) of said request for admission;
- else second determination if among said at least one already granted request there exists at least one granted request that can be serviced with a lower bandwidth than with which it was granted, so that said required bandwidth does not exceed said available bandwidth, servicing of said at least one granted request with said lower bandwidth and sending of a notification of grant (306, 406) of said request for admission;
- else third determination if among said at least one already granted request, there exists at least one granted request of which servicing can be stopped so that said required bandwidth does not exceed said available bandwidth, stopping of servicing of said at least one granted request, and sending of a notification of grant (306, 406) of said request for admission.

2. Method according to claim 1, **characterized in that**, a connection request (307, 407) for connecting to a service for which no notification of grant (306, 406) was sent, is refused.

3. Method according to claim 1 or 2, **characterized in that** said notification of allowance comprises information representative of a grant expiration delay, and if said request for admission is not renewed before expiration of said grant expiration delay, sending of a notification of grant revocation and stopping of servicing of said requested service.

4. Method according to any of claims 1 to 3, characterized said method comprises, before said step of first determination, a step of verification of access rights related to said request for admission, and if said access rights are insufficient, sending of a notification of admission rejection.

5. Method according to claim 4, **characterized in that** said access rights are part of a set comprising access rights related to:
- a user that is issuer of said request for admission; and/or
- a time of reception of said request for admission; and/or
- a duration of usage of a requested service; and/or
- a device from which said request for admission originates; and/or
- a service type said requested service; and/or
- a service category of said requested service.

6. Method according to any of claims 1 to 5, **characterized in that** before said second and said third determination a bandwidth limitation for a type of service is taken in to account, so that, if said required bandwidth for said requested service is superior to said bandwidth limitation for a type of service of said requested service, the admission request is refused and a rejection notification is sent, whereas if said required bandwidth for said requested service is equal or inferior to said bandwidth limitation for a type of service of said requested service, said admission request is considered in said second and said third determination.

7. Method according to any of claims 1 to 6, **characterized in that** before said second and said third determination a bandwidth limitation for a network interface on which said admission request is received is taken into account, so that, if said required bandwidth for said requested service is superior to said bandwidth limitation for a network interface on which said admission request is received, the admission request is refused and a rejection notification is sent, whereas if said required bandwidth for said requested service is equal or inferior to said bandwidth limitation for a network interface on which said admission request is received, said admission request is considered in said second and said third determination.

8. Method according to any of claim 1 to 7, **characterized in that** in said second and said third determination a priority associated to said request for admission is taken into account, so that among said at least one already granted request, only granted requests with a lower or equal associated priority than said request for admission are considered in said second and said third determinations.

9. Method according to claim 8, **characterized in that** said associated priority is part of a set comprising:
- a priority level associated to said request for admission; and/or
- a priority level associated to said requested service; and/or
- a priority level associated to a device from which said request and/or admission originates; and/or
- a priority level associated to a user that is issuer of said request for admission.

10. Method of accessing services, implemented by at least one device (101, 102, 103, 104) connected in a home network to an intermediate device (100) giving access to said services via a communication link (167), said communication link (167) being shared between said at least one device (101, 102, 103, 104), the method being **characterized in that** it comprises the following steps:
- sending of a request for admission of a service (302, 401), said request comprising information representative of a requested service;
- upon reception of a notification of grant (306, 406) of said request for admission (302, 401), sending of a connection request (307, 407) for connection to said requested service, and reception of at least one packet (309) belonging to said requested service;
- upon reception of a grant modification notification (403), said grant modification notification (403) comprising said information representative of said requested service and information representative of an alternative service with a bandwidth different from a bandwidth of said requested service, stop of reception of said at least one packet (309) belonging to said requested service and start of reception of at least one packet belonging to said alternative service.

11. Gateway device (100) for providing access, for devices (101, 102, 103, 104) in a local network (120, 121, 122, 123), to services accessed via a communication link (167) to an external network (150), said communication link (167) being shared between said devices (101, 102, 103, 104), said gateway device (100) being **characterized in that** it comprises the following means:
- means (2050) for determination if a required bandwidth for said requested service exceeds available bandwidth on said communication link (167), said available bandwidth being equal to a maximum bandwidth available on said communication link (167) minus a sum of bandwidth of at least one already admitted request stored in said granted admission repository (2050);
- means (200, 2050), for determining if among said at least one already granted request there exists at least one granted request that can be serviced with a lower bandwidth than with which it was granted, so that said required bandwidth does not exceed said available bandwidth on said communication link (167);
- means (200, 206, 201, 202, 203, 204) for servicing of said at least one granted request with said lower bandwidth;
- means for determining if among said at least one already granted request stored in said granted admission request repository (2050), there exists at least one granted request of which servicing can be stopped so that said required bandwidth does not exceed said available bandwidth on said communication link (167); and
- means (200, 206, 201, 202, 203, 204) for stopping of servicing of said at least one granted request.
